# FASCICULE DE BREVET EUROPEEN

(11) **EP 1 130 188 B1**
(45) Date de publication et mention de la délivrance du brevet: **02.07.2003**
(21) Numéro de dépôt: 01113122.4
(22) Date de dépôt: 28.06.1996
(51) Int. Cl.: E04F 13/02, C04B 41/60, B32B 13/08

(54) **Procédé de construction de second oeuvre**
Verfahren für Ausbauarbeiten
Method for non-structural work

(30) Priorité: 30.06.1995 FR 9508153
(43) Date de publication de la demande: 05.09.2001
(62) Demande divisionnaire de: 96917619.7
(73) Titulaire: LAFARGE PLATRES, 84000 Avignon (FR)
(72) Inventeur: Zuber, Francois, 84270 Vedene France (FR); Leclercq, Claude, 84800 Pernes-Les-Fontaines (FR); Bourne-Chastel, Pascal, 84210 SAINT DIDIER (FR)
(74) Mandataire: Cabinet Hirsch

(56) Documents cités:
- EP-A- 0 496 682
- EP-A- 0 521 804
- DE-A- 4 331 141
- FR-A- 2 505 908
- US-A- 3 975 320
- US-A- 4 287 103
- US-A- 4 661 164

## Description

La présente invention concerne la construction de second oeuvre. Plus particulièrement, l'invention s'intéresse à tout procédé de construction, selon lequel on dispose, d'une part, d'éléments plats préfabriqués, notamment des plaques, comportant un corps de plâtre et au mains une feuille de papier de parement, dont au moins une couche externe présente une face extérieure apparente, prête à être décorée, et d'autre part, d'au moins un enduit complémentaire de jointoiement pouvant être utilisé notamment pour la finition d'un joint. Ensuite, on assemble lesdits éléments plats entre eux, notamment avec un enduit, et on finit les joints avec ledit enduit complémentaire, de manière à obtenir une surface d'ensemble extérieure et apparente, relativement uniforme ou plane, y compris au niveau des joints. Un tel procédé est mis en oeuvre, par exemple, lorsqu'on assemble des plaques de plâtre revêtues d'un parement en carton avec un enduit de jointoiement, pour définir des espaces à l'intérieur d'un bâtiment, notamment des cloisons.

Conformément au document EP-A-0 521 804, le papier de parement peut comporter une couche supérieure dite jet supérieur, comprenant des fibres cellulosiques blanches, majoritairement chimiques, et une charge minérale de couleur claire, de préférence blanche, et une couche pigmentaire revêtant la couche supérieure, comprenant une charge minérale de couleur claire, de préférence blanche, et un liant. Ce document décrit par ailleurs l'appariement de la couleur de la plaque et du joint.

US-A-4 287 103 décrit un procédé de construction de second oeuvre, dans lequel on utilise un enduit de bouchage et de finition afin de remplir la cavité formée par les bords amincis des plaques. L'ensemble final est lisse, plat et monolithique. Il n'y a aucune indication de la couleur des plaques ou du joint.

Aucun des documents précités n'indique la nature précise de l'enduit complémentaire de jointoiement.

En général, la surface d'ensemble, extérieure et apparente, obtenue selon les procédés définis précédemment nécessite d'être préparée, avant de recevoir toute décoration en surface, qu'il s'agisse d'une ou plusieurs couches d'un revêtement en film, du type peinture ou laque, ou qu'il s'agisse d'une épaisseur de papier peint.

Cette préparation consiste, après terminaison du second oeuvre, à revêtir la surface d'ensemble obtenue, c'est-à-dire le parement des éléments plats préfabriqués plus les joints, avec une ou plusieurs couches d'une peinture ou enduit d'impression ou d'apprêt.

L'opération de préparation représente un coût supplémentaire, non négligeable, dans un processus complet de construction d'un bâtiment par exemple. Et encore, n'est-elle pas suffisante, dans certains cas, pour obtenir une surface d'ensemble décorée d'aspect uniforme, compte tenu en particulier des différences physico-mécaniques subsistant entre les joints d'un côté, et les éléments plats préfabriqués de l'autre côté.

La présente invention a pour objet de remédier aux inconvénients précités. Plus précisément, l'invention a pour objet un procédé de construction rompant avec l'approche traditionnelle retenue pour résoudre le problème exposé précédemment, c'est-à-dire supprimant la nécessité d'une préparation de la surface d'ensemble, avant toute décoration. Toutefois, l'invention a pour objet un procédé qui reste compatible avec les pratiques des professionnels de la construction, notamment ceux du second oeuvre.

L'invention fournit donc le procédé objet de la revendication 1.

La finesse de granulométrie de la charge minérale de l'enduit complémentaire permet d'obtenir une surface lisse correspondant à celle du parement de la plaque. Une granulométrie trop grosse de la charge provoque des défauts de surface d'ensemble, tels qu'une réverbération des rayonnements lumineux sur la surface de l'enduit, différente de celle sur la surface de plaque, entraînant des différences de ton et brillance de la teinte. Une granulométrie trop importante entraîne aussi des différences d'aspect physique, liées aux différences de rugosité entre la plaque et l'enduit.

La combinaison de l'appariement de la couleur de la plaque et du joint, avec la granulométrie de la charge minérale de l'enduit, permet de s'affranchir de la préparation préalable de surface.

Des variantes font l'objet des revendications 2 à 12.

La présente invention apporte les avantages déterminants suivants, consécutifs à l'homogénéité en surface de la surface d'ensemble obtenue selon la présente invention, non seulement en termes de couleur ou teinte, mais aussi en termes de certaines caractéristiques physiques ou physico-chimiques.

Dans une variante préférée de l'invention, on dispose d'un enduit de bouchage destiné à constituer l'essentiel des joints entre les différents éléments plats, et l'enduit complémentaire est un enduit de finition, applicable sur l'enduit de bouchage.

Conformément à un mode d'exécution avantageux de l'invention, et pour une structure et/ou composition, préexistantes, de la feuille de papier de parement, on ajuste la composition de l'enduit complémentaire.

Selon une autre variante de l'invention, et à l'inverse de ce qui précède, pour une composition préexistante d'enduit complémentaire, on ajuste la composition de la feuille de papier de parement.

Par ailleurs, le procédé est plus préférentiellement caractérisé en ce que, outre la couleur ou teinte, au moins l'une quelconque des caractéristiques physiques suivantes sont homogénéisées ou appariées entre éléments plats préfabriqués et enduit complémentaire, à savoir :
- l'aspect de surface, dont la réflectance ;
- la décoloration ou coloration sous l'effet de la lumière naturelle.

De manière avantageuse, ces différentes caractéristiques physiques sont définies comme suit :
- le facteur de réflectance de la surface d'ensemble, dont celui de la face extérieure apparente des joints, est compris entre 70% et 80%, et de préférence entre 72% et 76%, pour une longueur d'onde de 457 mn ;
- la décoloration ou coloration de la surface d'ensemble, dont celle de la face extérieure apparente des joints, présente un écart de couleur (delta E*) au plus égal à 3, après exposition pendant 72 heures à une source de rayonnement UV, disposée à 15 cm de la surface, de longueur d'onde au moins égale à 290 nm ;

En pratique, et par des essais de routine, l'homme du métier compétent sait ajuster la structure et/ou la composition d'une feuille de papier de parement, et/ou la composition d'un enduit, de manière à satisfaire aux principes techniques définis précédemment, de telle sorte que les exemples décrits ci-après ne sont nullement limitatifs.

La présente invention sera maintenant décrite en prenant comme exemple d'éléments plats préfabriqués, des plaques de plâtre. Ces plaques sont typiquement composées d'un corps de plâtre coulé en usine entre deux feuilles de papier constituant à la fois son parement et son armature.

Usuellement, l'une des feuilles de papier utilisées pour fabriquer les plaques de plâtre est de couleur foncée, pouvant varier entre une couleur grise et une couleur marron, car elle est composée de fibres cellulosiques n'ayant pas subi un traitement de purification particulier. Classiquement, ce papier dit gris est obtenu à partir de pâte chimique non blanchie, et/ou de pâte mécanique, et/ou de pâte thermomécanique, et/ou de pâte mi-chimique. Par pâte mécanique, on entend habituellement une pâte obtenue entièrement par des moyens mécaniques à partir de diverse matières premières, essentiellement de bois, pouvant être apportées par des produits de récupération issus du bois tels que les vieux cartons, des rognures de papier kraft et/ou de vieux journaux. Par pâte thermomécanique, on entend une pâte obtenue par traitement thermique suivi d'un traitement mécanique de la matière première. Par pâte mi-chimique, on entend une pâte obtenue en éliminant de la matière première une partie de ses composants non cellulosiques au moyen d'un traitement chimique, et nécessitant un traitement mécanique ultérieur pour disperser les fibres.

L'autre feuille présente une face apparente dite de parement, de couleur généralement plus claire que la feuille grise. Pour obtenir cette couleur plus claire, la ou les couches de cette face sont à base de pâte chimique éventuellement blanchie, composée de fibres de cellulose recyclées et/ou neuves, et/ou de pâte mécanique éventuellement blanchie. Par pâte chimique, on entend une pâte obtenue en éliminant de la matière première par un traitement chimique, par exemple par cuisson en présence d'agents chimiques appropriés tels que la soude ou des bisulfites, une très grande proportion de ses composants non cellulosiques. Quand ce traitement chimique est complété par un blanchiment, on élimine une grande partie des substances colorées, ainsi que les substances risquant de se dégrader en vieillissant et de donner des teintes jaunes désagréables liées à la présence, par exemple de lignine.

Dans un mode d'exécution préférentiel du procédé de l'invention, et conformément au document EP-A-0 521 804, dont le contenu est incorporé à la présente description, en tant que de besoin, le papier de parement comporte une couche supérieure dite jet supérieur , comprenant des fibres cellulosiques blanches, majoritairement chimiques, une charge minérale de couleur claire, de préférence blanche, ainsi qu'une couche pigmentaire revêtant la couche supérieure, comprenant également une charge minérale de couleur claire, de préférence blanche, et un liant. En correspondance, selon la présente invention, l'enduit complémentaire comprend une charge minérale de couleur claire, de préférence blanche, dont la granulométrie est comprise entre 5 et 35 µm.

La charge minérale représente entre 50% et 85% du poids total de l'enduit complémentaire.

Par ailleurs, l'enduit peut comprendre un agent hydrophobe, par exemple entre 0,2% et 5%, et de préférence entre 0,5% et 3% du poids total de l'enduit, par exemple un dérivé de silicone. Cet agent permet notamment un ralentissement de la cinétique de séchage de l'enduit, ce qui favorise sa non fissuration, mais également sa meilleure résistance à l'agression de la vapeur d'eau, lors des opérations d'enlèvement de papier peint, ceci sans pour autant nuire à la bonne accroche d'une peinture ou colle à papier, sur la surface d'ensemble, dont la surface apparente des joints. En fait, cet agent hydrophobe permet de niveler les pouvoirs absorbants des surfaces de l'enduit et du papier de parement de la plaque. Ainsi, toutes peintures ou colles à papier appliquées sur la surface d'ensemble obtenue connaissent peu de décalage de cinétique d'absorption entre l'enduit et la plaque, ce qui permet d'éviter l'apparition de spectres ou de défauts d'homogénéité de teinte.

L'enduit comprend également un liant organique dispersable en phase aqueuse, dans une proportion comprise entre 1 et 20%, et préférentiellement entre 2 et 12% du poids total de l'enduit complémentaire, par exemple des polyacétates de vinyle et/ou des esters d'acide acrylique. Le choix de ce liant est important, car il doit conférer à l'enduit une souplesse suffisante pour résister aux contraintes mécaniques, et il doit présenter, à la fois, un pouvoir collant pour obtenir une bonne accroche sur la surface d'ensemble, et une bonne résistance aux agressions de la lumière UV.

En outre, on prévoit dans la composition de l'enduit un agent de maniabilité, notamment un agent rétenteur d'eau et épaississant, par exemple de la méthylhydroxyéthylcellulose, dans une proportion de 1 à 15‰, et de préférence de 2 à 12‰. du poids total de l'enduit complémentaire.

Enfin, on peut inclure dans la composition de l'enduit au moins un agent glissant, notamment une argile, dans la proportion de 0,1 à 2%, et préférentiellement de 0,1 à 0,6 % du poids total de l'enduit complémentaire. Ces argiles sont de préférence des dérivés silicatés, et plus préférentiellement des argiles du type attapulgite.

D'autres composants, tels que des biocides, des dispersants, des agents anti-moussants, et des pigments peuvent également être incorporés dans la composition de l'enduit de manière habituelle.

L'invention sera mieux comprise par l'exemple suivant détaillé, donné à titre indicatif et non limitatif.

On part de plaques de plâtre similaires à l'exemple 5 du document EP-A-0 521 804, qui sont assemblées avec un- joint de bouchage classique, par exemple, un enduit de joint commercialisé sous la marque déposée "PREGYLYS"® de la Société PLATRES LAFARGE. Le jet supérieur du parement de la plaque est obtenu à partir de 65% de fibres cellulosiques chimiques blanchies, et 35% de talc, et est revêtu d'une couche pigmentaire comprenant comme charge minérale, 85% en poids de CaSO4,2H2O sous forme d'aiguilles de longueur entre 3 et 5 µm, et comme liant, 10,3% en poids de copolymère styrène-butadiène. Le joint de bouchage reçoit ensuite une couche mince d'un enduit complémentaire de jointoiement selon l'invention ayant la composition suivante :
- 50 à 85% en poids de carbonate de calcium, granulométrie de 5 à 35 µm, en tant que charge minérale ;
- 2 à 12% en poids d'un liant comportant des polyacétates de vinyle et des esters d'acide acrylique en dispersion aqueuse ;
- 0,5 à 3% en poids d'un dérivé de silicone en tant qu'agent hydrophobe ;
- 0,1 à 0,9% d'un dérivé cellulosique du type méthylhydroxyéthylcellulose ;
- 0,1 à 0,6% d'un agent glissant du type attapulgite ;
- 1 à 12% d'un autre dérivé silicaté, en tant qu'agent glissant complémentaire ;
- 0,1 à 5% d'un sel d'ammonium d'acide polycarboxylique en tant que dispersant ;
- 0,001 à 0,015 d'oxyde de fer, en tant que pigment ;
- 0,1 à 0,3% d'une préparation de N-formoles et isothiazolinones, en tant que biocide ;
- 0.1 à 0,3% d'un agent anti-moussant classique ;
- eau qsp 100%.

Les pourcentages de poids donnés sont par rapport au poids total de l'enduit, sauf indication contraire.

Pour les besoins de comparaison, des plaques standards conformément uniquement à la norme française NF P 72-302, et ne comportant pas le jet supérieur et couche pigmentaire définis ci-dessus, sont assemblées avec un enduit de joint pour plaque de plâtre de la gamme des enduits "PREGYLYS"®, commercialisé par la Société PLATRES LAFARGE.

Les caractéristiques des deux surfaces d'ensemble ainsi formées sont comparées par application des tests suivants :
(A) Degré de blancheur, ou facteur de réflectance R obtenu selon la norme NFQ 03038 à une longueur d'onde à 457 nm. Ce degré représente le rapport, en pourcentage, entre le rayonnement réfléchi du corps considéré et celui d'un diffuseur parfait dans les mêmes conditions.
(B) Résistance au rayonnement UV, obtenue en exposant les surfaces d'ensemble, dans une enceinte comportant huit lampes à vapeur de mercure haute pression de 400 watts chacune, à une longueur d'onde qui n'est pas inférieure à 290 nm. Les surfaces sont maintenues à une distance de 15 cm des lampes et à une température de 60°C pendant 72 heures. Les écarts de couleur delta E* sont mesurés sur un spectrocolorimètre, selon le standard DIN 6174, sous un angle de 8°, illuminant D65 en brillant spéculaire inclus dans le système L*, a*, b*, dans lequel L* est la luminance, a* représente la transition du vert au rouge, et b* représente la transition du bleu au jaune. Un point E*, dans ce système, qui est fonction de L*, a*, b*, définit la colorimétrie d'un échantillon et l'écart est mesuré par rapport à un point de référence. De manière générale, un écart de couleur au-delà de 2 devient discernable à l'oeil nu.

Les résultats des essais (A) sont reportés dans le Tableau I et ceux de l'essai (B) dans le Tableau II ci-après.

**Tableau I**

| | Surface d'ensemble standard | Surface d'ensemble selon l'invention |
|---|---|---|
| Réflectance R (%) | Plaque: 50 à 60 | Plaque: 72 à 76 |
| | Enduit: 65 à 85 | Enduit: 72 à 76 |

Ceci montre que la surface d'ensemble selon la présente invention est nettement plus homogène que celle d'un ensemble selon la technique habituelle.

**Tableau II**

| Avant exposition | Standard | Invention |
|---|---|---|
| Mesures initiales de la plaque | L* = 82,94 | L* = 90,41 |
| | a* = -0,43 | a* = -0,03 |
| | b* = 4,64 | b* = 3,13 |
| Mesures initiales du joint | L* = 90,70 | L* = 89,70 |
| | a* = 0,73 | a* = 0,50 |
| | b* = 5,28 | b* = 3,60 |
| | Ecart de couleur Plaque/Joint delta E* = 7,87 | Ecart de couleur Plaque/Joint delta E* = 1 |

| Exposition aux UV pendant 72 heures | | |
|---|---|---|
| Mesures de la plaque après exposition | L* = 81,10 | L* = 90,38 |
| | a* = 0,69 | a* = -0,91 |
| | b* = 12,93 | b* = 7,40 |
| | Ecart de couleur delta E* = 8,56; jaunissement très sensible plus taches marrons | Ecart de couleur delta E* = 4,36; jaunissement sensible |
| Mesures du joint après exposition | L* = 88,90 | L* = 89,17 |
| | a* = 0,91 | a* = 0,50 |
| | b* = 3,83 | b* = 3,19 |
| | Ecart de couleur delta E* = 2,32; léger jaunissement plus quelques taches marrons | Ecart de couleur delta E* = 0,67; écart de couleur très faible |

Ce tableau montre que l'écart de couleur avant exposition aux UV est beaucoup plus faible pour une surface d'ensemble selon l'invention, que pour une surface d'ensemble telle qu'obtenue traditionnellement.

Ce tableau montre encore que l'évolution de l'écart de couleur après exposition aux UV est beaucoup moins importante dans la surface d'ensemble selon l'invention que traditionnellement. En effet, il faut que l'écart de couleur avant exposition et après exposition soit aussi réduit que possible, afin que la surface d'ensemble ne donne l'impression à l'oeil nu d'être tachetée, ou couvertes de zones de teinte et brillance différentes.

Ceci n'est pas possible avec une surface d'ensemble obtenue avec des plaques de plâtre et des produits traditionnels, mais le très faible écart de la surface d'ensemble conformément à l'invention permet de pallier cet inconvénient.

## Revendications

1. Procédé de construction de second oeuvre, selon lequel:
- on dispose, d'une part, d'éléments plats préfabriqués, notamment des plaques, comportant un corps de plâtre et au moins une feuille de papier de parement, dont au moins une couche externe présente une face extérieure apparente, prête à être décorée, et d'autre part, d'au moins un enduit complémentaire de jointoiement pouvant être utilisé notamment pour la finition d'un joint ;
- on assemble lesdits éléments plats entre eux, notamment avec un enduit, et on finit les joints avec ledit enduit complémentaire, de manière à obtenir une surface d'ensemble extérieure et apparente, relativement uniforme ou plane, y compris au niveau des joints,
et dans lequel, d'une part, la structure et/ou la composition de la feuille de papier de parement, et d'autre part, la composition de l'enduit complémentaire sont ajustées l'une par rapport à l'autre pour obtenir, à l'état sec de l'enduit complémentaire, une surface d'ensemble présentant une ou plusieurs caractéristiques physiques, dont la couleur ou teinte, sensiblement homogènes dans pratiquement toute la surface d'ensemble, y compris au niveau de la face extérieure apparente des joints,
**caractérisé en ce que** l'enduit complémentaire de jointoiement comprend, par rapport au poids total de l'enduit:
- de 50 à 85% d'une charge minérale de couleur claire, de préférence blanche, dont la granulométrie est comprise entre 5 et 35 µm;
- un liant organique dispersable en phase aqueuse, dans une proportion comprise entre 1 et 20%;
- un agent de maniabilité;
- éventuellement un agent glissant;
- éventuellement d'autres composants choisis parmi biocides, agents anti-moussants, et pigments; et
- eau qsp 100%.

2. Procédé selon la revendication 1, **caractérisé en ce que** l'enduit complémentaire de jointoiement comprend:
- un agent de maniabilité qui est un agent rétenteur d'eau et épaississant en une quantité de 1‰ à 15‰.

3. Procédé selon la revendication 1 ou 2, **caractérisé en ce qu'**on dispose d'un enduit de bouchage destiné à constituer l'essentiel des joints entre les différents éléments plats, et l'enduit complémentaire est un enduit de finition, applicable sur l'enduit de bouchage.

4. Procédé selon la revendication 1 ou 2, **caractérisé en ce que**, pour une structure et/ou composition, préexistantes, de la feuille de papier de parement, on ajuste la composition de l'enduit complémentaire.

5. Procédé selon la revendication 1 ou 2, **caractérisé en ce que**, pour une composition préexistante d'enduit complémentaire, on ajuste la composition de la feuille de papier de parement.

6. Procédé selon la revendication 1 ou 2, **caractérisé en ce que**, outre la couleur ou teinte, la caractéristique physique suivante est homogénéisée entre éléments plats préfabriqués et enduit complémentaire, à savoir:
- l'aspect de surface, dont la réflectance.

7. Procédé selon la revendication 6, **caractérisé en ce que** le facteur de réflectance de la surface d'ensemble, dont celui de la face extérieure apparente des joints, est compris entre 70% et 80%, et de préférence entre 72% et 76%, pour une longueur d'onde de 457nm.

8. Procédé selon la revendication 1 ou 2, **caractérisé en ce que** l'enduit complémentaire comprend un liant organique dispersable en phase aqueuse, dans une proportion comprise entre 2 et 12% du poids total de l'enduit complémentaire.

9. Procédé selon la revendication 1 ou 2, **caractérisé en ce que** l'enduit complémentaire comprend, en tant qu'agent rétenteur d'eau et épaississant, de la méthylhydroxyéthylcellulose.

10. Procédé selon la revendication 1 ou 2, **caractérisé en ce que** l'enduit complémentaire comprend au moins un agent glissant, notamment une argile, dans la proportion de 0,1 à 2%, et préférentiellement de 0,1 à 0,6 % du poids total de l'enduit complémentaire.

11. Procédé selon l'une des revendications 1 à 10, **caractérisé en ce que** ladite surface d'ensemble peut être décorée, sans préparation de celle-ci, telle que revétement avec au moins une couche d'impression complémentaire.

## Patentansprüche

1. Bautechnisches Verfahren für Ausbauarbeiten, bei welchem:
- zum einen flächige vorgefertigte Bauelemente, insbesondere Platten, welche einen Gipskörper und mindestens einen Bogen Verblendungspapier aufweist, bei welchen mindestens eine Außenfläche eine sichtbare außen liegende Fläche aufweist, die für dekorative Zwecke bereit ist, und zum anderen mindestens eine zusätzliche Verputzmasse zum Ausfugen vorgesehen ist, die insbesondere zur Fertigbearbeitung einer Fuge verwendbar ist,
- die flächigen Elemente untereinander verbunden werden, insbesondere mit einer Verputzmasse, und die Fugen mit der zusätzlichen Verputzmasse in der Weise fertig bearbeitet werden, dass man eine außen liegende und sichtbare Fläche erhält, die einschließlich im Bereich der Fugen relativ gleichmäßige bzw. eben ist, und
- bei welchem einerseits die Struktur und/oder die Zusammensetzung des Bogens aus Verblendungspapier und andererseits die Zusammensetzung der zusätzlichen Verputzmasse bezüglich zu einander so angepasst sind, dass man im trockenen Zustand des zusätzlichen Putzes eine Oberfläche des Gesamtverbunds erhält, welche eine oder mehrere physikalische Eigenschaften aufweist, unter anderem hinsichtlich der Farbe oder des Farbtons, die praktisch über die gesamte Oberfläche des Verbunds im wesentlichen homogen sind, unter anderem auch im Bereich der sichtbaren Außenfläche der Fugen,
**dadurch gekennzeichnet, dass**, bezogen auf das Gesamtgewicht des Putzes, die zusätzliche Verputzmasse zum Ausfugen folgendes enthält:
- 50 bis 85 % einer mineralischen Füllmasse von heller, vorzugsweise weißer, Farbe, deren Korngröße zwischen 5 und 35 µm liegt;
- ein organisches Bindemittel, das in wässriger Phase in einem Anteil von 1 bis 20 % dispergierbar ist;
- ein Mittel zur Verbesserung der Handhabung;
- gegebenenfalls ein Glättmittel;
- gegebenenfalls weitere Bestandteile, die aus der Gruppe der Biozide, der Schaumverhinderungsmittel und der Farbstoffe gewählt sind; und
- Wasser auf 100 %.

2. Verfahren nach Anspruch 1, **dadurch gekennzeichnet, dass** die zusätzliche Verputzmasse zum Auslugen folgendes enthält:
- ein Mittel zur Verbesserung der Handhabung, bei dem es sich um ein Mittel zum Zurückhalten von Wasser und ein Verdickungsmittel handelt, in einer Menge von 1 ‰ bis 15‰.

3. Verfahren nach Anspruch 1 oder 2, **durch gekennzeichnet**, dass ein Abdichtputz vorgesehen wird, der dazu bestimmt ist, den wesentlichen Teil der Fugen zwischen den verschiedenen flächigen Elementen zu bilden, und dass die zusätzliche Verputzmasse ein Fertigputz ist, der zum Auftragen auf den Abdichtputz geeignet ist.

4. Verfahren nach Anspruch 1 oder 2, **dadurch gekennzeichnet, dass** bei einer zuvor schon vorhandenen Struktur und/oder Zusammensetzung des Bogens aus Verblendungspapier die Zusammensetzung der zusätzlichen Verputzmasse entsprechend eingestellt wird.

5. Verfahren nach Anspruch 1 oder 2, **dadurch gekennzeichnet, dass** bei einer zuvor schon vorhandenen Zusammensetzung der zusätzlichen Verputzmasse die Zusammensetzung des Bogens aus Verblendungspapier entsprechend eingestellt wird.

6. Verfahren nach Anspruch 1 oder 2, **dadurch gekennzeichnet, dass** neben der Farbe bzw. Farbtönung die folgende physikalische Eigenschaft zwischen den vorgefertigten flächigen Elementen und der zusätzlichen Verputzmasse vergleichmäßigt wird, und zwar:
- das Aussehen der Oberfläche, unter anderem das Reflexionsvermögen.

7. Verfahren nach Anspruch 6, **dadurch gekennzeichnet, dass** der Reflexionsfaktor der Oberfläche des Verbunds, darunter auch der sichtbaren Außenfläche der Fugen, bei einer Wellenlänge von 457 nm zwischen 70 % und 80 %, vorzugsweise zwischen 72 % und 76 %, beträgt.

8. Verfahren nach Anspruch 1 oder 2, **dadurch gekennzeichnet, dass** die zusätzliche Verputzmasse ein organisches Bindemittel enthält, das in wässriger Phase in einem Anteil dispergierbar ist, der zwischen 2 und 12 % des Gesamtgewichts der zusätzlichen Verputzmasse beträgt.

9. Verfahren nach Anspruch 1 oder 2, **dadurch gekennzeichnet, dass** die zusätzliche Verputzmasse als Mittel zum Zurückhalten von Wasser und Verdickungsmittel Methylhydroxyethyl-Zellulose enthält.

10. Verfahren nach Anspruch 1 oder 2, **dadurch gekennzeichnet, dass** die zusätzliche Verputzmasse mindestens ein Gleitmittel, insbesondere eine Tonerde, in einem Anteil von 0,1 bis 2 %, vorzugsweise von 0,1 bis 0,6 %, bezogen auf das Gesamtgewicht der zusätzlichen Verputzmasse enthält.

11. Verfahren nach einem der Ansprüche 1 bis 10, **dadurch gekennzeichnet, dass** die Oberfläche des Verbundes ohne Vorbereitung dekoriert werden kann, wie beispielsweise ohne Beschichtung mit mindestens einer Lage aus einer zusätzlichen ersten Grundiermasse.

## Claims

1. Method for the construction of interior works, according to which:
- there are available, on the one hand, prefabricated flat elements, in particular boards, comprising a plaster body and at least one sheet of lining paper, of which at least one outer layer has a visible outer face, ready to be decorated, and, on the other hand, at least one complementary pointing coat which can be used in particular for joint-finishing;
- said flat elements are joined together, in particular with a coat, and the joints are finished with said complementary coat so as to obtain an overall visible outer surface which is relatively uniform or plane, even in the region of the joints,
and in which, on the one hand, the structure and/or the composition of the lining paper and, on the other hand, the composition of the complementary coat are coordinated with one another to obtain, in the dry state of the complementary coat, an overall surface having one or more physical characteristics, including the colour or shade, which are substantially uniform over practically the entire overall surface, even in the region of the visible outer face of the joints,
**characterised in that** the complementary pointing coat comprises, with respect to the total weight of the coat:
- 50 to 85% of a mineral filler in a light colour, preferably white, the grain size being between 5 and 35 µm;
- an organic binder dispersible in the aqueous phase in a proportion between 1 and 20%;
- a workability agent;
- optionally a slip agent;
- optionally other constituents selected from biocides, anti-foaming agents and pigments; and
- water in a quantity sufficient for 100%.

2. Method according to claim 1, **characterised in that** the complementary pointing coat comprises:
- a workability agent being a water-retaining and thickening agent in a quantity of 1‰ to 15‰.

3. Method according to claim 1 or 2, **characterised in that** a sealing coat is provided to constitute the majority of the joints between the various flat elements, and the complementary coat is a finishing-coat which can be applied to the sealing coat.

4. Method according to claim 1 or 2, **characterised in that** the composition of the complementary coat is adjusted for a pre-existing structure and/or composition of the lining paper.

5. Method according to claim 1 or 2, **characterised in that** the composition of the lining paper is adjusted for a pre-existing composition of the complementary coat.

6. Method according to claim 1 or 2, **characterised in that**, apart from the colour or shade, the following physical characteristic is made homogeneous between prefabricated flat elements and complementary coat, namely:
- the surface appearance including the reflectance.

7. Method according to claim 6, **characterised in that** the reflectance factor of the overall surface, including that of the visible outer face of the joints, is between 70% and 80%, preferably between 72% and 76% for a wavelength of 457 nm.

8. Method according to claim 1 or 2, **characterised in that** the complementary coat comprises an organic binder dispersible in an aqueous phase, in a proportion of between 2 and 12% of the total weight of the complementary coat.

9. Method according to claim 1 or 2, **characterised in that** the complementary coat comprises, as water-retaining and thickening agent, methyl hydroxy ethyl cellulose.

10. Method according to claim 1 or 2, **characterised in that** the complementary coat comprises at least one slip agent, in particular a clay, in the proportion of 0.1 to 2% and preferably of 0.1 to 0.6% of the total weight of the complementary coat.

11. Method according to any one of claims 1 to 10 **characterised in that** said overall surface may be decorated without preparation thereof, such as covering with at least one complementary sizing coat.
